(19) **Europäisches Patentamt**

**European Patent Office**

**Office européen des brevets**

(11) **EP 1 233 080 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(51) Int Cl.7: **C22C 38/18**, C21D 7/13, C21D 1/25

(21) Anmeldenummer: **01890327.8**

(22) Anmeldetag: **26.11.2001**

(54) **Stahl für Kunststofformen und Verfahren zur Wärmebehandlung desselben**

Steel for plastic molds and process of heat treatment thereof

Acier pour moules à matières plastiques et son traitement thermique

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **14.02.2001 AT 2302001**

(43) Veröffentlichungstag der Anmeldung:
**21.08.2002 Patentblatt 2002/34**

(73) Patentinhaber: **BÖHLER Edelstahl GmbH**
**A-8605 Kapfenberg (AT)**

(72) Erfinder:
• **Sammt, Klaus, Dipl.-Ing.**
**8740 Zeltweg (AT)**

• **Sammer, Johann, Ing.**
**8700 Leoben (AT)**
• **Lichtenegger, Gerhard, Dr.**
**8605 Kapfenberg (AT)**

(74) Vertreter: **Wildhack, Helmut, Dr. Dipl.-Ing.**
**Patentanwälte Wildhack - Jellinek**
**Landstrasser Hauptstrasse 50**
**1030 Wien (AT)**

(56) Entgegenhaltungen:
**EP-A- 0 170 598     EP-A- 0 508 574**
**WO-A-99/36584     US-A- 3 401 035**

• **PATENT ABSTRACTS OF JAPAN vol. 2000, no. 09, 13. Oktober 2000 (2000-10-13) & JP 2000 160297 A (NIPPON KOSHUHA STEEL CO LTD), 13. Juni 2000 (2000-06-13)**

## EP 1 233 080 B1

**Beschreibung**

Die Erfindung betrifft einen martensitausgehärteten Stahl mit verbesserter Zerspanbarkeit, guter Schweißbarkeit und hoher Korrosionsbeständigkeit, sowie dessen Verwendung. Weiters umfaßt die Erfindung ein Verfahren zur Wärmebehandlung eines martensitaushärtbaren Stahles mit verbesserter Zerspanbarkeit, welches Verfahren einen auch bei großem Querschnitt durchgehärteten Gegenstand bereitstellt.

In vielen Erzeugnissen des allgemeinen und technischen Bedarfes sind Kunststoffe enthalten, welche Kunststoffteile in der Regel eine bestimmte Form und Oberflächenbeschaffenheit aufweisen sollen. Eine Formgebung kann beispielsweise durch ein Pressen, ein Spritzpressen oder ein Spritzgießen von Massen in Formteilen vorgenommen werden. Die zur ästhetischen Beurteilung durch den Kunden wichtige Oberflächenbeschaffenheit der Teile wird im wesentlichen bei der Formgebung durch die Oberflächengüte des verwendeten Werkzeuges bestimmt.

Als Werkzeuge zur Formgebung von Kunststoffmassen und auch als Spannelemente wie Rahmen und dergleichen werden gewöhnlich Gegenstände bzw. Teile aus Stahl, insbesondere auch aus martensitausgehärteten Stählen verwendet. Bei der Bereitstellung einer Stahlsorte dieser Art sind für den genannten Zweck die Interessen des Formenbauers einerseits und die Interessen des Formenbenutzers andererseits zu berücksichtigen.

Der Formenbauer wünscht zu einer kurzfristig wirtschaftlichen Herstellung von Kunststofformen und zugehörigen Teilen möglichst massive Werkstücke aus thermisch vergüteten Stab- oder Flachmaterial vom Lager zu verwenden, wodurch einerseits bei gleichzeitig geringem Abfall Produktionskosten durch Entfallen der Wärmebehandlung reduziert werden können. Andererseits können bei einer Fertigung aus bereits vergütetem Material einem Formenbenutzer Kunststofformen oder Teile besonderer Maßgenauigkeit zur Verfügung gestellt werden, da Verzugserscheinungen einer Form durch eine der Formfertigung nachfolgende thermische Behandlung vermieden werden.

Von einem thermisch vergüteten Ausgangsmaterial fordert der Formenbauer zur leichten Bearbeitung und Erzielung einer hinreichenden Oberflächenqualität der Kunststoffteile insbesondere eine gute Zerspanbarkeit. Weiters wird eine vollständige Durchhärtung der verwendeten Werkstücke gefordert, damit über den gesamten Querschnitt gleichmäßige mechanische Eigenschaften der daraus hergestellten Kunststofformen erzielt werden können.

Für den Formenbenutzer stellt aus wirtschaftlichen Gründen neben einer guten Schweißbarkeit zur kostengünstigen Erstellung und insbesondere Reparatur von Formen die Korrosionsbeständigkeit des Werkstoffes einen Aspekt hoher Bedeutung dar. Nur Kunststofformen und Formteile aus hinreichend korrosionsbeständigen Stählen eignen sich zur oftmaligen Verwendung mit Zwischenlagerzeiten und/oder im Dauerbetrieb. Durch Füllstoffe, insbesondere jedoch durch Verunreinigungen der Kunststoffe, wie beispielsweise durch aus einer sauer katalysierten Polymerisation stammenden Säuren, stehen die Oberflächen der Formen im regelmäßigen Kontakt mit aggressiven, Korrosion verursachenden Chemikalien.

Bekannt ist, für die Herstellung von Kunststofformen mit vergleichsweise hoher Korrosionsbeständigkeit, Stähle mit einem Chromgehalt von mehr als 12 Gew.-% zu verwenden. Solche Stähle sind durch die Legierungen mit den DIN-Werkstoffnummern 1.2085, 1.2314 oder 1.2316 bekannt. Stähle dieser Art weisen bei einem Chromgehalt von zumindest 14.0 Gew.-% einen Kohlenstoffgehalt von 0.33 Gew.-% und mehr auf, welche hohen Kohlenstoffgehalte bei einer Karbidbildung eine Erniedrigung der Chromkonzentration in der Matrix und somit eine Verringerung der Korrosionsbeständigkeit, insbesondere im Umfeld der Karbide, bewirken können.

Zur Erreichung besserer Korrosionsbeständigkeit werden durchwegs Stähle mit abgesenktem Kohlenstoffgehalt, wie beispielsweise ein Stahl mit der DIN-Werkstoffnummer 1.4005 verwendet. Ein kohlenstoffarmer, martensitischer Stahl wird auch in US 6,045,633 zur Herstellung von Kunststofformen vorgeschlagen. Ein derartiger Stahl enthält neben Eisen und herstellungsbedingten Verunreinigungen in Gewichtsprozent 1.0 - 1.6% Mangan, 0.25 - 1.0% Silicium, 0.5 - 1.3% Kupfer, 12.0 - 14.0% Chrom, 0.06 - 0.3% Schwefel, sowie weitere Elemente. Bei dieser Legierung soll zusätzlich zum abgesenkten Kohlenstoffgehalt eine Erhöhung der Korrosionsbeständigkeit durch Kupfer bewirkt werden. Kupfergehalte in dieser Höhe können allerdings erhebliche Probleme bei einer Warmumformung von Werkstücken bedingen und insbesondere eine Ausbildung feiner Risse an der Oberfläche der bearbeiteten Werkstücke bewirken, welche Risse wiederum Spaltkorrosion begünstigen können.

Ein weiterer korrosionsbeständiger, kohlenstoffarmer Stahl wird in EP 0 170 598 beschrieben.

Die bekannten Stähle für Kunststofformen und dergleichen Teile können den vielfältigen Bedürfnissen der Formenbauer und Formenbenutzer durchaus hinsichtlich der mechanischen und korrosionschemischen Eigenschaften gerecht werden, allerdings wird bei Werkstoffen dieser Art eine oftmals unzureichende Zerspanbarkeit beobachtet. Weiters hat sich auch gezeigt, daß gegebenenfalls eine Durchhärtung von Werkstücken aus diesen Legierungen bei einer thermischen Vergütung schwer erreicht wird, vor allem bei massiven Gegenständen mit großen Querschnitten, wie beispielsweise produktionstechnisch vorteilhaft anfallenden Schmiedestäben. Daraus können ungleichmäßige mechanische Eigenschaften der aus solchen Werkstücken erzeugten Formen und damit Schwachstellen in diesen resultieren, welche vorwiegend durch vorzeitiges Materialversagen deutlich werden.

Der Erfindung liegt nun die Aufgabe zugrunde einen martensitausgehärteten Stahl bereitzustellen, welcher Stahl gleichzeitig gute Schweißbarkeit, hohe Korrosionsbeständigkeit und verbesserte Zerspanbarkeit aufweist.

Es ist eine weitere Aufgabe der Erfindung, ein Verfahren zur Wärmebehandlung eines martensitaushärtbaren Stahles mit verbesserter Zerspanbarkeit, welches Verfahren einen auch bei großem Querschnitt durchgehärteten Gegenstand bereitstellt, anzugeben.

Schließlich ist es Ziel der Erfindung Anwendungen eines erfindungsgemäßen Stahles darzustellen.

Die Aufgabe, einen martensitausgehärteten Stahl mit verbesserter Zerspanbarkeit, guter Schweißbarkeit und hoher Korrosionsbeständigkeit bereitzustellen, wird durch einen Stahl nach Anspruch 1 gelöst.

Die Vorteile der Erfindung sind insbesondere darin zu sehen, daß durch abgestimmte legierungstechnische Maßnahmen ein martensitaushärtbarer Stahl bereitgestellt wird, welcher synergetisch einen mittels Wärmebehandlung gewünscht einstellbaren Ferritanteil im Gefüge und somit eine verbesserte Zerspanbarkeit aufweist, gleichzeitig jedoch mit einem Kohlenstoffgehalt von 0.02 - 0.075 Gew.-% und einem Chromgehalt von 12.4 - 15.2 Gew.-% eine hohe Korrosionsbeständigkeit und gute Schweißbarkeit sicherstellt. Dabei ist erfindungsgemäß ein Nickelgehalt von 0.35 1.8 Gew.-% vorgesehen, welcher einerseits zur Einstellung des Ferritanteiles im Gefüge genutzt wird. Andererseits wird durch Nickel in Verbindung mit Chrom eine Beständigkeit gegenüber reduzierenden Chemikalien erzielt, wodurch ein erfindungsgemäßer Stahl eine hohe chemische Resistenz erreicht.

Zur Bildung von die Zerspanbarkeit fördernden Mangansulfiden im Werkstoff sind Mangangehalte von 0.5 - 0.95 Gew.-% und Schwefelgehalte von 0.08 - 0.25 Gew.-% erfindungswesentlich, wobei das Verhältnis der Gehalte an Mangan und Schwefel so abzustimmen ist, daß eine vorteilhafte Zerspanbarkeit bei gleichzeitig guter Korrosionsbeständigkeit erreicht wird. Es wurden Hinweise gefunden, daß geringere Mangangehalte als 0.5 Gew.-% eine Tendenz zur Bildung von Chromsulfiden bewirken können, welche Chromsulfide die Zerspanbarkeit nachteilig beeinflussen. Hingegen sollte sich bei höheren Mangangehalten als 0.95 Gew.% regelmäßig eine Bildung von chromfreien Mangansulfiden ergeben. Calcium bis zu maximal 0.01 Gew.-% kann eine günstige isotrope Morphologie der Mangansulfideinschlüsse erbringen.

Kupfer ist im Bereich von 0.1 - 0.45 Gew.-% vorgesehen, welche Kupfergehalte zur Erhöhung der Korrosionsbeständigkeit beitragen. Eine obere Grenze des Kupfergehaltes ist dabei mit 0.45 Gew.-% gegeben, bis zu welcher Grenze eine gute Warmumformbarkeit von Werkstücken, insbesondere großen Schmiedestücken, aus einem erfindungsgemäßen Stahl erreichbar ist.

Molybdän mit einem Gehalt von 0.05 bis 1.0 Gew.-% dient dem Erhalt einer gewünschten Umwandlungskinetik zur Härtesteigung beim Martensitaushärten und erweist sich im vorgeschriebenen Konzentrationsbereich zudem einerseits als günstig zur weitgehenden Unterdrückung einer Chromkarbidbildung und erhöht andererseits die Korrosionsbeständigkeit. Höhere Molybdängehalte als 1.0 Gew.-% hingegen senken die Rißbeständigkeit bei Warmumformungsprozessen von Werkstücken in einigen Temperaturbereichen.

Weitere Elemente eines erfindungsgemäßen Stahles sind mit Kohlenstoff, Silicium, Phosphor, Vanadium, Aluminium und Stickstoff mit den gemäß Anspruch 1 dargelegten Gewichtsanteilen vorgesehen.

Ein erfindungsgemäßer Stahl weist in einer bevorzugten Ausgestaltung 0.80 - 0.90 Gew.-% Mangan und 0.10 - 0.16 Gew.-% Schwefel auf. In diesem Zusammensetzungsbereich mit einem Mn/S Gewichtsverhältnis von 5.0 bis 9.0 wird bei besonders verbesserter Zerspanbarkeit eine gute Korrosionsbeständigkeit erreicht, welcher Effekt dem Einfluß einer kugeligen Morphologie der Mangansulfidpartikel in der in Rede stehenden Ausgestaltung zugeordnet werden kann. Auch scheint bei einem stöchiometrischen Verhältnis von Mn/S < 3:1 eine Ausbildung gegebenenfalls auch geringfügig chromhältiger Mangansulfidpartikel begünstigt zu sein, wodurch der Werkstoff vorteilhafte Korrosionseigenschaften erreichen kann.

Mit höheren Chromgehalten verbessert sich im wesentlichen die Korrosionsbeständigkeit von Legierungen, während deren Bearbeitbarkeit geringfügig abnimmt. Ein erfindungsgemäßer Stahl weist mit Vorteil 13.8 - 15.0%, vorzugsweise 14.1 - 14.7% Chrom auf, in welchen Zusammensetzungsbereichen die gewünschten vorteilhaften Eigenschaften gleichzeitig erreicht werden können.

In bezug auf gute Korrosionseigenschaften sowie eine exakte Ferritanteil-Einstellung und verbesserte Zerspanungseigenschaften, ist es wesentlich, daß ein erfindungsgemäßer Stahl mit Nickel in Gehalten von 0.35 - 1.8 Gew.-%, vorzugsweise 0.35 - 1.1 Gew.-% und insbesondere 0.8 - 1.0 Gew.-% legiert ist. Höhere Nickelkonzentrationen stabilisieren zumeist nachteilig Austenit bei höheren Temperaturen, wohingegen niedrigere Nickelgehalte das Umwandlungsverhalten des Werkstoffes beim thermischen Vergüten ungünstig beeinflussen.

Bei der Optimierung der Werkstoffeigenschaften hat sich ein Kupfergehalt von 0.25 - 0.35 Gew.-% als vorteilhaft herausgestellt. In diesem Bereich der Kupferkonzentration beträgt die durch dieses Legierungselement erwirkte Verbesserung der allgemeinen Korrosionsbeständigkeit bei warmumgeformten Gegenständen ein Maximum, wobei eine zunehmende Spaltkorrosionsneigung bei höheren Gehalten an Kupfer durch eine Ausbildung feiner Oberflächenrisse erklärt werden kann.

Eine gute Bearbeitbarkeit des erfindungsgemäßen Werkstoffes wird bei einem Ferritanteil im Gefüge bis zu 10 Vol.-% erreicht. Es können jedoch auch in vorteilhafter Weise, bei nur geringfügig geringerer Bearbeitbarkeit, Ferritanteile von bis zu 6 Vol.-% vorgesehen sein, wodurch die mechanischen Eigenschaften eines Formteiles, insbesondere quer zur Verformungsrichtung erhöht sind.

Die weitere Aufgabe ein Verfahren zur Wärmebehandlung eines martensitaushärtbaren Stahles mit verbesserter Zerspanbarkeit anzugeben, welches Verfahren einen auch bei großem Querschnitt durchgehärteten Gegenstand bereitstellt, wird dadurch gelöst, daß ein Stahlblock mit einer Zusammensetzung entsprechend Anspruch 1 in einem ersten Schritt einer Glühbehandlung zur Ausbildung und Einstellung eines Ferritanteiles im Gefüge unterworfen wird und in einem zweiten Schritt eine Warmverformung mit einem mindestens 4-fachen Verformungsgrad desselben erfolgt, wonach in einem dritten Schritt eine Weichglühung des Schmiedestückes und anschließend eine thermische Vergütung bestehend aus mindestens einer Härtebehandlung und mindestens einer Anlaßbehandlung durchgeführt werden.

Die Vorteile eines erfindungsgemäßen Verfahren sind darin zu sehen, daß ein wärmebehandelter metallischer Gegenstand bereitgestellt werden kann, welcher auch bei großen Querschnitten ein vollständig durchgehendes Härtegefüge aufweist, weshalb aus solchen Werkstücken Kunststofformteile mit gleichmäßigen mechanischen Eigenschaften und hoher Güte erstellt werden können. Die vorteilhafte Durchhärtung kann dabei vorwiegend der Wirkung von Nickel im Verbund mit weiteren Legierungselementen zugeschrieben werden.

Bei dem erfindungsgemäßen Verfahren ist es möglich, eine Einstellung des Ferritgehaltes im Gefüge in weiten Bereichen zu treffen und damit die Zerspanbarkeit von Werkstücken zu beeinflussen.

Bei einem vorgesehenen Nickelgehalt von 0.35 -1.8 Gew.-% kann, nach der Erfindung, in gezielter Weise jeweils durch eine Wahl der Glühbehandlungstemperatur und Zeit ein Ferritanteil im Gefüge von 0 bis 70 Volumenprozent eingestellt werden. Bei ausreichender Glühzeit folgt beispielsweise der Ferritanteil nachstehenden empirischen Gleichungen in Abhängigkeit vom Nickelgehalt:

$$0.5\% \text{ Nickel: Ferritanteil [Vol.-\%]} = 0.345 \times \text{Glühbehandlungstemperatur } [^\circ\text{C}] -370 \tag{1}$$

$$1.0\% \text{ Nickel: Ferritanteil [Vol.-\%]} = 0.355 \times \text{Glühbehandlungstemperatur } [^\circ\text{C}] -390 \tag{2}$$

$$1.5\% \text{ Nickel: Ferritanteil [Vol.-\%]} = 0.375 \times \text{Glühbehandlungstemperatur } [^\circ\text{C}] -430 \tag{3}$$

Es kann auch bei vorgegebener Glühbehandlungstemperatur der Ferritanteil im Gefüge auf einfache Weise durch eine Veränderung des Nickelgehaltes im Stahl eingestellt werden.

Wenn, wie sich als vorteilhaft erwiesen hat, die Glühbehandlung zwischen 1080°C und 1350°C und für zumindest 12 Stunden, vorzugsweise für zumindest 24 Stunden, durchgeführt wird, kann eine genaue Einstellung der Ferritmenge mit einer günstigen Stabilität betreffend die Weiterverarbeitung des Werkstoffes sichergestellt werden.

In weiterer vorteilhafter Ausbildung des erfindungsgemäßen Verfahrens wird durch eine Glühbehandlung der Ferritanteil im Gefüge (in Volumenprozent) bis zu 10%, vorzugsweise bis zu 6% Volumenprozent eingestellt, wodurch eine gewünscht gute Zerspanbarkeit der Werkstücke bei gleichzeitig guten Festigkeitseigenschaften erreicht wird.

Es wurde gefunden, daß sich der Ferritgehalt eines erfindungsgemäß erstellten Werkstückes besonders exakt festlegen läßt, wenn der Stahl (in Gewichtsprozent) 13.8 - 15.0%, vorzugsweise 14.1 - 14.7% Chrom und/oder 0.35-1.8%, vorzugsweise 0.35 - 1.1% und insbesondere 0.8 - 1.0% Nickel enthält, wobei in diesem Gehaltsbereich an Chrom und Nickel Werkstücke mit einer den Stand der Technik überragenden Korrosionsbeständigkeit erstellt werden können.

Wenn, wie sich gezeigt, der Stahl 0.25 bis 0.35 Gew.-% Kupfer enthält wird die Korrosionsbeständigkeit des Werkstoffes besonders verbessert. Kupferkonzentrationen von über 0.35 Gew.-% können jedoch Nachteile bei einer Warmumformung des Materials und verminderte Oberflächengüte des Teiles bewirken. Weiters kann die Neigung zur Spaltkorrosion des Werkstoff durch höhere Kupfergehalte als 0.35 Gew.-% vergrößert sein.

Die Verwendung eines erfindungsgemäßen Stahles hat sich beim Einsatz für Rahmenkonstruktionen für Kunststofformen als besonders vorteilhaft und wirtschaftlich herausgestellt. Aufgrund verbesserter Zerspanbarkeit, hoher Korrosionsbeständigkeit und guter Schweißbarkeit eignet sich ein derartiger Stahl zur wirtschaftlichen Herstellung solcher Formenteile, welche sich im Gebrauch durch eine hohe chemische Widerstandsfähigkeit und lange Standzeit auszeichnen. Als besonders günstig für eine Erstellung der Formen oder Teile, insbesondere im Hinblick auf höchste Wirtschaftlichkeit, hat sich eine Verwendung von Schmiedestücken aus der erfindungsgemäßen Legierung herausgestellt.

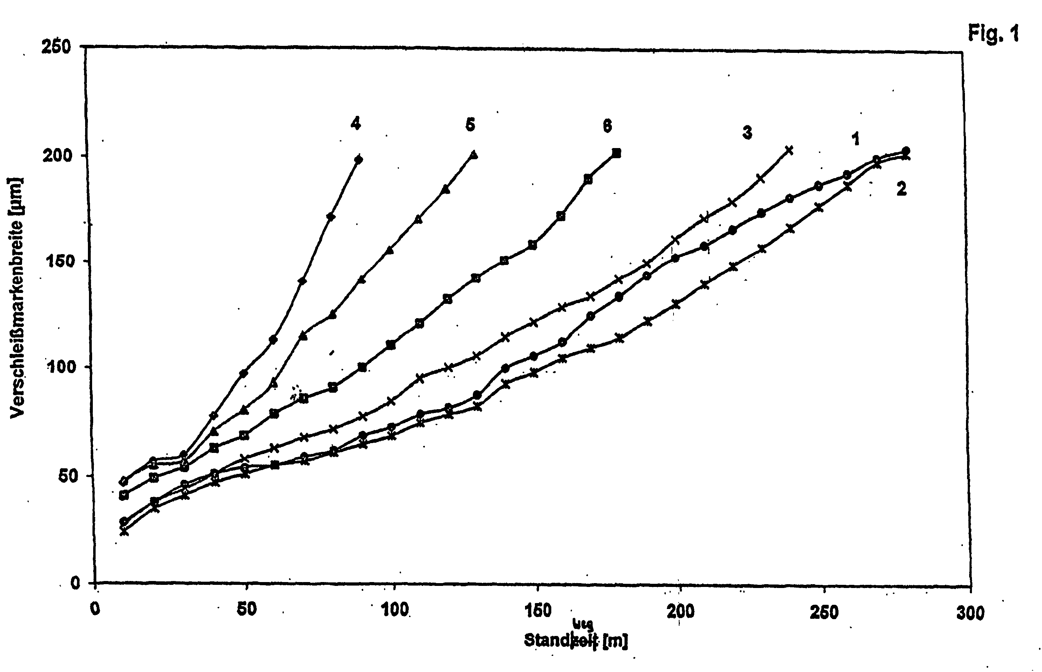

Im folgenden ist die Erfindung anhand von lediglich als beispielhaft zu verstehenden Ausführungen dargelegt. Es zeigt Fig. 1 ein Schaubild über die Verschleißmarkenbreite des Werkzeuges in Abhängigkeit vom Standweg für Werkstücke aus einem erfindungsgemäßen Stahl (bezeichnet mit 1-3), sowie aus Vergleichsstählen (bezeichnet mit 4-6).

Zur Prüfung der Materialeigenschaften kamen erfindungsgemäß hergestellte Werkstücke und Vergleichswerkstücke mit chemischen Zusammensetzungen gemäß Tabelle 1 zur Anwendung. Die chemischen Zusammensetzungen der Werkstücke 1 bis 3 betreffen jeweils einen Stahl nach der Erfindung, jene mit der Bezeichnung 4 bis 6 betreffen aus dem Stand der Technik bekannte Vergleichsstähle.

Tabelle 1:

| Chemische Zusammensetzung untersuchter Werkstücke in Gew.-% (mit Ausnahme herstellungsbedingter Verunreinigungen). | | | | | | |
|---|---|---|---|---|---|---|
| Zusammensetzung [Gew.-%] | | | | | | |
| Element | Werkstück 1 | Werkstück 2 | Werkstück 3 | Werkstück 4 | Werkstück 5 | Werkstück 6 |
| C | 0.05 | 0.04 | 0.06 | 0.34 | 0.08 | 0.05 |
| Mn | 0.8 | 0.70 | 0.86 | 1.40 | 0.80 | 1.35 |
| Si | 0.34 | 0.43 | 0.37 | 0.35 | 0.45 | 0.48 |
| S | 0.24 | 0.1 | 0.14 | 0.12 | 0.18 | 0.22 |
| P | 0.02 | 0.01 | 0.01 | 0.02 | 0.02 | 0.02 |
| Cr | 13.9 | 12.5 | 14.5 | 16.0 | 12.8 | 12.6 |
| Ni | 0.63 | 0.4 | 0.95 | 0.65 | | |
| Cu | 0.15 | 0.25 | 0.34 | | | 0.95 |
| Mo | 0.1 | 0.25 | 0.92 | 0.15 | | |
| V | 0.06 | 0.03 | 0.09 | | | 0.08 |
| Al | 0.03 | 0.02 | 0.02 | 0.04 | 0.04 | 0.04 |
| N | 0.04 | 0.05 | 0.05 | 0.05 | 0.05 | 0.04 |
| Rest | Fe | Fe | Fe | Fe | Fe | Fe |

Die Werkstücke wurden einer Wärmebehandlung unterworfen, welche Wärmebehandlung in einem ersten Schritt aus einer 15 stündigen Glühbehandlung zwischen 1080°C und 1350°C bestand, wobei bei erfindungsgemäßen Werkstücken ein gewünschter Ferritgehalt bei gegebenem Nickelgehalt über die Temperatur eingestellt wurde. In einem zweiten Schritt wurden die Werkstücke jeweils bei circa 1000°C mit einem Verformungsgrad von 6-fach geschmiedet und danach einer Weichglühung bei 590°C unterworfen. Abschließend erfolgte eine thermischen Vergütung, umfassend ein Härten von 1020°C und ein Anlassen im Bereich von 530°C. Die Werkstücke wurden auf ihre Durchhärtung untersucht. Weiters wurde die Zerspanbarkeit geprüft und die Korrosionsbeständigkeit untersucht.

Die Durchhärtung der Werkstücke wurde quantitativ am Querschnitt der Werkstücke mittels fünf Härtemessungen entlang der horizontalen Achse des Querschnitts beurteilt. Die Härteunterschiede in bezug auf den größten Härtewert lagen bei erfindungsgemäß erstellten Werkstücken jeweils innerhalb von maximal ± 5 %, wohingegen die Vergleichswerkstücke 4, 5 oder 6 Unterschiede der Härte von ± 10% und mehr aufweisen.

Zur Bestimmung der Zerspanbarkeit wurde ein mit Hartmetallwendeschneidplatten bestückter Torusfräser verwendet, wobei die Schnittparameter wie folgt gegeben waren:

Schnittgesschwindigkeit: 350 mmin$^{-1}$
Vorschub/Zahn: 0.3 mm

Die durch die Erfindung erzielte Verbesserung ist anhand von Fig. 1 dargelegt, aus welcher eine deutlich erhöhte Standzeit eines Werkzeuges bei der Bearbeitung eines erfindungsgemäßen Stahles ersichtlich ist.

Bei gleicher chemischer Zusammensetzung erwiesen sich Werkstücke, erstellt durch ein erfindungsgemäßes Verfahren, mit einem Ferritanteil im Gefüge von bis zu ca. 5% als leichter bearbeitbar.

Eine Untersuchung der Korrosionsbeständigkeit wurde in einer ersten Testreihe durch einen Salzsprühtest nach DIN 50021 vorgenommen, wobei der korrodierte Flächenanteil nach einer Behandlungszeit von 2 Stunden und 5 Stunden ermittelt wurde. Die Probengröße der untersuchten Werkstücke betrug 36 cm$^2$.

Tabelle 2:

| Korrosionsbeständigkeit untersuchter Werkstücke nach DIN 50021. | | | | | | |
|---|---|---|---|---|---|---|
| Korrodierter Flächenanteil [%] | | | | | | |
| Sprühdauer [h] | Werkstück 1 | Werkstück 2 | Werkstück 3 | Werkstück 4 | Werkstück 5 | Werkstück 6 |
| 2 | 28 | 33 | 32 | 35 | 50 | 37 |

Tabelle 2:  (fortgesetzt)

| Korrosionsbeständigkeit untersuchter Werkstücke nach DIN 50021. | | | | | | |
|---|---|---|---|---|---|---|
| Korrodierter Flächenanteil [%] | | | | | | |
| Sprühdauer [h] | Werkstück 1 | Werkstück 2 | Werkstück 3 | Werkstück 4 | Werkstück 5 | Werkstück 6 |
| 5 | 57 | 61 | 63 | 68 | 71 | 69 |

Ein Schweißen von Formteilen aus einem erfindungsgemäßen Stahl bereitete keine Probleme.

**Patentansprüche**

1.  Martensitaus-gehärteter Stahl mit verbesserter Zerspanbarkeit, guter Schweißbarkeit und hoher Korrosionsbeständigkeit, enthaltend (in Gewichtsprozent)

> 0.02 - 0.075% Kohlenstoff
> 0.1 - 0.6% Silicium
> 0.5 - 0.95% Mangan
> 0.08 - 0.25% Schwefel
> maximal 0.04% Phosphor
> 12.4 - 15.2% Chrom
> 0.05 - 1.0% Molybdän
> 0.35 - 1.8% Nickel
> maximal 0.15% Vanadium
> 0.1 - 0.45% Kupfer
> maximal 0.03% Aluminium
> 0.02 - 0.08% Stickstoff,

Rest Eisen und herstellungsbedingte Verunreinigungen, welcher Stahl einen Ferritanteil im Gefüge von weniger als 10 Volumsprozent aufweist.

2.  Stahl nach Anspruch 1, enthaltend 0.80 - 0.90% Mangan und 0.10 - 016% Schwefel.

3.  Stahl nach Anspruch 1 oder 2, enthaltend 13.8-15.0% Chrom.

4.  Stahl nach einem der Ansprüche 1 bis 3, enthaltend 14.1-14.9% Chrom.

5.  Stahl nach einem der Ansprüche 1 bis 4, enthaltend 0.35 -1.1% Nickel.

6.  Stahl nach einem der Ansprüche 1 bis 5, enthaltend 0.25 - 0.35% Kupfer.

7.  Stahl nach einem der Ansprüche 1 bis 6 mit einem Ferritanteil im Gefüge (in Volumsprozent) von bis zu 6%.

8.  Verfahren zur Wärmebehandlung eines martensitaushärtbaren Stahles mit verbesserter Zerspanbarkeit, welches Verfahren einen auch bei großem Querschnitt durchgehärteten Gegenstand bereitstellt, **dadurch gekennzeichnet, daß** ein Stahlblock mit einer Zusammensetzung (in Gewichtsprozent) von

> 0.02 - 0.075% Kohlenstoff
> 0.1 -0.6% Silicium
> 0.5 - 0.95% Mangan
> 0.08 - 0.25% Schwefel
> maximal 0.04% Phosphor
> 12.4 - 15.2% Chrom
> 0.05 - 1.0% Molybdän
> 0.35 - 1.8% Nickel
> maximal 0.15% Vanadium
> 0.1 - 0.45% Kupfer

max. 0.03% Aluminium
0.02 - 0.08% Stickstoff

Rest Eisen und herstellungsbedingte Verunreinigungen, in einem ersten Schritt einer Glühbehandlung zur Ausbildung und Einstellung eines Ferritanteiles von bis zu maximal 10 Volumenprozent im Gefüge zwischen 1080°C und 1350°C und für zumindest 12 Stunden unterworfen wird und in einem zweiten Schritt eine Warmverformung mit mindestens 4-fachen Verformungsgrad desselben erfolgt, wonach in einem dritten Schritt eine Weichglühung und anschließend eine thermische Vergütung bestehend aus mindestens einer Härtebehandlung und mindestens einer Anlaßbehandlung durchgeführt werden.

9. Verfahren nach Anspruch 8, **dadurch gekennzeichnet, dass** die Glühbehandlung des ersten Schrittes zumindest 24 Stunden lang durchgeführt wird.

10. Verfahren nach einem der Ansprüche 8 oder 9, **dadurch gekennzeichnet, daß** durch die im ersten Schritt erfolgende Glühbehandlung der Ferritgehalt (in Volumenprozent) auf vorzugsweise bis zu 6% Volumenprozent eingestellt wird.

11. Verfahren nach einem der Ansprüche 8 bis 10, **dadurch gekennzeichnet, daß** der Stahl (in Gewichtsprozent) 13.8 - 15.0%, Chrom enthält.

12. Verfahren nach einem der Ansprüche 8 bis 11, **dadurch gekennzeichnet, dass** der Stahl (in Gewichtsprozent) 14.1-14.7% Chrom enthält.

13. Verfahren nach einem der Ansprüche 8 bis 12, **dadurch gekennzeichnet, dass** der Stahl (in Gewichtsprozent) 0.35-1.8% Nickel enthält.

14. Verfahren nach einem der Ansprüche 8 bis 13, **dadurch gekennzeichnet, dass** der Stahl (in Gewichtsprozent) 0.35-1.1% Nickel enthält.

15. Verfahren nach einem der Ansprüche 8 bis 14, **dadurch gekennzeichnet, dass** der Stahl (in Gewichtsprozent) 0.8-1.0% Nickel enthält.

16. Verfahren nach einem der Ansprüche 8 bis 15, **dadurch gekennzeichnet, daß** der Stahl 025-0.35 Gew.-% Kupfer enthält.

17. Verwendung eines Stahles nach einem der Ansprüche 1 bis 7 für Rahmenkonstruktionen für Kunststofformen.

18. Verwendung eines Stahles nach einem der Ansprüche 1 bis 7 für ein Schmiedestück mit einer Dicke von mindestens 0.32m und einer Querschnittsfläche von mindestens 0.1m$^2$, wärmebehandelt nach einem der Verfahren gemäß einem der Ansprüche 8 bis 10 zur Herstellung von durch spanende Bearbeitung gefertigte Kunststofformen und/oder Formenteilen.

**Claims**

1. A martensite-hardened steel with an improved ease of machining, a good welding capacity and a high degree of corrosion resistance, containing (in percentages by weight)

from 0.02 to 0·075% of carbon
from 0·1 to 0·6% of silicon
from 0·5 to 0·95% of manganese,
from 0·08 to 0·25% of sulphur
a maximum of 0·04% of phosphorus
from 12·4 to 15·2% of chromium
from 0·05 to 1·0% of molybdenum
from 0·35 to 1·8% of nickel
a maximum of 0·15% of vanadium
from 0·1 to 0·45% of copper

a maximum of 0·03% of aluminium
from 0·02 to 0·08% of nitrogen,

the remainder iron and impurities caused as a result of the production, which steel has a ferrite proportion in the structure of less than 10% by volume.

2.  A steel according to Claim 1, containing from 0·80 to 0·90% of manganese and from 0·10 to 0·16% of sulphur.

3.  A steel according to Claim 1 or 2, containing from 13·8 to 15·0% of chromium.

4.  A steel according to one of Claims 1 to 3, containing from 14·1 to 14·9% of chromium.

5.  A steel according to one of Claims 1 to 4, containing from 0·35 to 1·1% of nickel.

6.  A steel according to one of Claims 1 to 5, containing from 0·25 to 0·35% of copper.

7.  A steel according to one of Claims 1 to 6, with a ferrite proportion in the structure of (in percentage by volume) of up to 6%.

8.  A process for the heat treatment of a steel capable of being martensite-hardened and with an improved ease of machining, which process produces an article which is full-hardened even with a large cross-section, **characterized in that** a steel block with a composition (in percentages by weight) of

    from 0·02 to 0·075% of carbon
    from 0·1 to 0·6% of silicon
    from 0·5 to 0·95% of manganese,
    from 0·08 to 0·25% of sulphur
    a maximum of 0·04% of phosphorus
    from 12·4 to 15·2% of chromium
    from 0·05 to 1·0% of molybdenum
    from 0·35 to 1·8% of nickel
    a maximum of 0·15% of vanadium
    from 0·1 to 0·45% of copper
    a maximum of 0·03% of aluminium
    from 0·02 to 0·08% of nitrogen,

    the remainder iron and impurities caused as a result of the production, is subjected to an annealing treatment in order to form and set a ferrite proportion of up to a maximum of 10% by volume in the structure between 1080°C and 1350°C and for at least 12 hours in a first step and a hot-forming with an at least 4-fold degree of deformation of the latter takes place in a second step, after which a soft annealing and subsequently a thermal treatment comprising at least one hardening treatment and at least one tempering treatment are carried out in a third step.

9.  A process according to Claim 8, **characterized in that** the annealing treatment of the first step is carried out for a duration of at least 24 hours.

10. A process according to one of Claims 8 or 9, **characterized in that** the ferrite content (in percentage by volume) is set to preferably up 6% by volume by the annealing treatment which takes place in the first step.

11. A process according to one of Claims 8 to 10, **characterized in that** the steel contains (in percentage by weight) from 13·8 to 15·0% of chromium.

12. A process according to one of Claims 8 to 11, **characterized in that** the steel contains (in percentage by weight) from 14·1 to 14·7% of chromium.

13. A process according to one of Claims 8 to 12, **characterized in that** the steel contains (in percentage by weight) from 0·35 to 1·8% of nickel.

14. A process according to one of Claims 8 to 13, **characterized in that** the steel contains (in percentage by weight) from 0·35 to 1·1% of nickel.

15. A process according to one of Claims 8 to 14, **characterized in that** the steel contains (in percentage by weight) from 0·8 to 1·0% of nickel.

16. A process according to one of Claims 8 to 15, **characterized in that** the steel contains from 0·25 to 0·35% by weight of copper.

17. Use of a steel according to one of Claims 1 to 7 for frame structures for plastics-material moulds.

18. Use of a steel according to one of Claims 1 to 7 for a forged piece with a thickness of at least 0·32 m and a cross-sectional area of at least 0·1 m², heat-treated in accordance with one of the processes according to one of Claims 8 to 10 in order to produce plastics-material moulds and/or mould parts produced by cutting machining.

**Revendications**

1. Acier à trempe martensitique avec usinabilité améliorée, bonne aptitude au soudage et résistance élevée à la corrosion, contenant (en pour cent pondéral en poids)

    0,02 - 0,075 % de carbone
    0,1 - 0,6 % de silicium
    0,5 - 0,95 % de manganèse
    0,08 - 0,25 % de soufre
    jusqu'à 0,04 % de phosphore
    12,4 - 15,2 % de chrome
    0,05 - 1,0 % de molybdène
    0,35 - 1,8 % de nickel
    jusqu'à 0,15 % de vanadium
    0,1 - 0,45 % de cuivre
    jusqu'à 0,03 % d'aluminium
    0,02 - 0,08 % d'azote,

    le reste étant du fer et des impuretés provoquées par la fabrication, lequel acier présente une proportion de ferrite dans la structure inférieure à 10 pour cent en volume.

2. Acier selon la revendication 1, contenant 0,80 - 0,90 % de manganèse et 0,10 - 0,16 % de soufre.

3. Acier selon la revendication 1 ou 2, contenant 13,8 - 15,0 % de chrome.

4. Acier selon l'une des revendications 1 à 3, contenant 14,1 - 14,7 % de chrome.

5. Acier selon l'une des revendications 1 à 4, contenant 0,35 - 1,1 % de nickel.

6. Acier selon l'une des revendications 1 à 5, contenant 0,25 - 0,35 % de cuivre.

7. Acier selon l'une des revendications 1 à 6, avec une proportion de ferrite dans la structure (en pour cent en volume) jusqu'à 6 %.

8. Procédé de traitement thermique d'un acier pouvant être soumis à une trempe martensitique avec usinabilité améliorée, lequel procédé réalise un objet trempé à coeur même en cas de section importante, **caractérisé en ce qu'**un lingot d'acier ayant une composition (en pour cent en poids) de

    0,02 - 0,075 % de carbone
    0,1 - 0,6 % de silicium
    0,5 - 0,95 % de manganèse
    0,08 - 0,25 % de soufre
    jusqu'à 0,04 % de phosphore

12,4 -15,2 % de chrome
0,05 -1,0 % de molybdène
0,35 - 1,8 % de nickel
jusqu'à 0,15 % de vanadium maximum
0,1 - 0,45 % de cuivre
jusqu'à 0,03 % d'aluminium
0,02 - 0,08 % d'azote,

le reste étant du fer et des impuretés provoquées par la fabrication, est, dans une première étape, soumis à un traitement de recuit en vue de la formation et du réglage d'une proportion de ferrite dans la structure pouvant atteindre jusqu'à 10 pour cent en volume entre 1 080 °C et 1 350 °C et pendant au moins 12 heures et, dans une deuxième étape, le lingot subit une déformation à chaud avec un taux de déformation au moins quadruple, après quoi, dans une troisième étape, un recuit d'adoucissement et ensuite un traitement thermique composé d'au moins un traitement de trempe et d'au moins un revenu thermique.

9. Procédé selon la revendication 8, **caractérisé en ce que** le traitement de recuit de la première étape est effectué au moins pendant 24 heures.

10. Procédé selon l'une des revendications 8 ou 9, **caractérisé en ce que**, du fait du traitement de recuit effectué dans la première étape, la teneur en ferrite (en pour cent en volume) est réglée de préférence jusqu'à 6 pour cent en volume.

11. Procédé selon l'une des revendications 8 à 10, **caractérisé en ce que** l'acier (en pour cent en poids) contient 13,8 - 15,0 % de chrome.

12. Procédé selon l'une des revendications 8 à 11, **caractérisé en ce que** l'acier (en pour cent en poids) contient 14,1 - 14,7 % de chrome.

13. Procédé selon l'une des revendications 8 à 12, **caractérisé en ce que** l'acier (en pour cent en poids) contient 0,35 -1,8 % de nickel.

14. Procédé selon l'une des revendications 8 à 13, **caractérisé en ce que** l'acier (en pour cent en poids) contient 0,35 - 1,1 % de nickel.

15. Procédé selon l'une des revendications 8 à 14, **caractérisé en ce que** l'acier (en pour cent en poids) contient 0,8 - 1,0 % de nickel.

16. Procédé selon l'une des revendications 8 à 15, **caractérisé en ce que** l'acier contient 0,25 - 0,35 % en poids de cuivre.

17. Utilisation d'un acier selon l'une des revendications 1 à 7 pour des constructions de châssis pour des moules pour plastique.

18. Utilisation d'un acier selon l'une des revendications 1 à 7 pour une pièce forgée d'une épaisseur d'au moins 0,32 m et d'une aire de section d'au moins 0,1 m$^2$, soumis à un traitement thermique selon un des procédés selon une des revendications 8 à 10 pour la fabrication de moules pour plastique et/ou de pièces de moule réalisées par usinage par enlèvement de copeaux.

Fig. 1

EP 1 233 080 B1